# EUROPÄISCHE PATENTSCHRIFT

(11) **EP 1 583 897 B1**
(45) Veröffentlichungstag und Bekanntmachung des Hinweises auf die Patenterteilung: **15.06.2011**
(21) Anmeldenummer: 04701898.1
(22) Anmeldetag: 14.01.2004
(51) Int. Cl.: F02F 3/22

(54) **VERFAHREN ZUM EINBRINGEN VON SHAKERBOHRUNGEN IN DEN K HLKANA L EINES EINTEILIGEN KOLBENS**
METHOD FOR THE INTRODUCTION OF SHAKER DRILLINGS IN THE COOLING CHANNEL OF A ONE-PIECE PISTON
PROCEDE POUR CREER DES ALESAGES "SHAKER" DANS LE CANAL DE REFROIDISSEMENT D'UN PISTON MONOBLOC

(30) Priorität: 16.01.2003 DE 10301367
(43) Veröffentlichungstag der Anmeldung: 12.10.2005
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2004/000036
(87) Internationale Veröffentlichungsnummer: WO 2004/065776

(56) Entgegenhaltungen:
- DE-A- 3 444 661
- DE-A- 10 152 316
- US-A- 4 608 947
- US-A1- 2002 133 946

## Beschreibung

Die Erfindung betrifft ein Verfahren zum Einbringen von Shakerbohrungen in den Kühlkanal eines einteiligen Kolbens nach dem Oberbegriff des Anspruches 1.

Aus der Patentanmeldung mit dem Aktenzeichen PCT/EP 02/02381 ist ein einteiliger Kühlkanalkolben bekannt, bei dem die Bolzennaben und die Kolbenschaftelemente über eine im Wesentlichen ringförmige Anbindung mit dem Kolbenkopf verbunden sind. Obwohl dieser Kolben unterhalb des Kühlkanals eine umlaufende Aussparung aufweist, ist bislang kein Verfahren bekannt, das es ermöglicht, in den Kühlkanal des aus obigem Stand der Technik bekannten, einteiligen Kühlkanalkolbens Shakerbohrungen in Richtung des Kolbenbodens einzubringen, um damit die Kühlung des Kolbenbodens zu verbessern.

Bekannt ist es, in einen in der Patentanmeldung DE 102 44 512.5 beschriebenen mehrteiligen Kühlkanalkolben, der aus einem Kolbenunterteil und einem Kolbenoberteil mit einem nach unten offenem Kühlkanal besteht, derartige Shakerbohrungen einzubringen, indem diese in den Kühlkanal in Richtung Kolbenboden gebohrt werden, bevor das Kolbenoberteil auf das Kolbenunterteil montiert wird, wobei dann auch der Kühlkanal verschlossen wird. Das Dokument DE 3444661 zeigt einen weiteren Kolben mit Kühlkanälen.

Hiervon ausgehend liegt der Erfindung das Problem zugrunde, ein Verfahren anzugeben, das es ermöglicht, in den Kühlkanal eines einteiligen Kolbens mit aus Stabilitätsgründen über eine mechanische Anbindung mit dem Kolbenoberteil verbundenen Bolzennaben und Kolbenschaftelementen Shakerbohrungen zur Verbesserung der Kühlung des Kolbenbodens einzuarbeiten.

Gelöst wird das Problem mit den im Kennzeichen des Hauptanspruches stehenden Merkmalen.

Ein Ausführungsbeispiel der Erfindung wird im Folgenden anhand der Zeichnungen beschrieben. Es zeigen
- Fig. 1: ein zusammengesetztes Schnittbild eines einteiligen Kolbens gemäß der Erfindung, dessen linke Hälfte einen Querschnitt des Kolbens entlang der Linie BB in Fig. 2 und dessen rechte Hälfte einen Querschnitt des Kolbens entlang der Linie CC in Fig. 2 darstellt, und
- Fig. 2: einen parallel zum Kolbenboden gelegten Schnitt durch den erfindungsge- mäßen Kolben entlang der Längsachse der Bolzennabe.

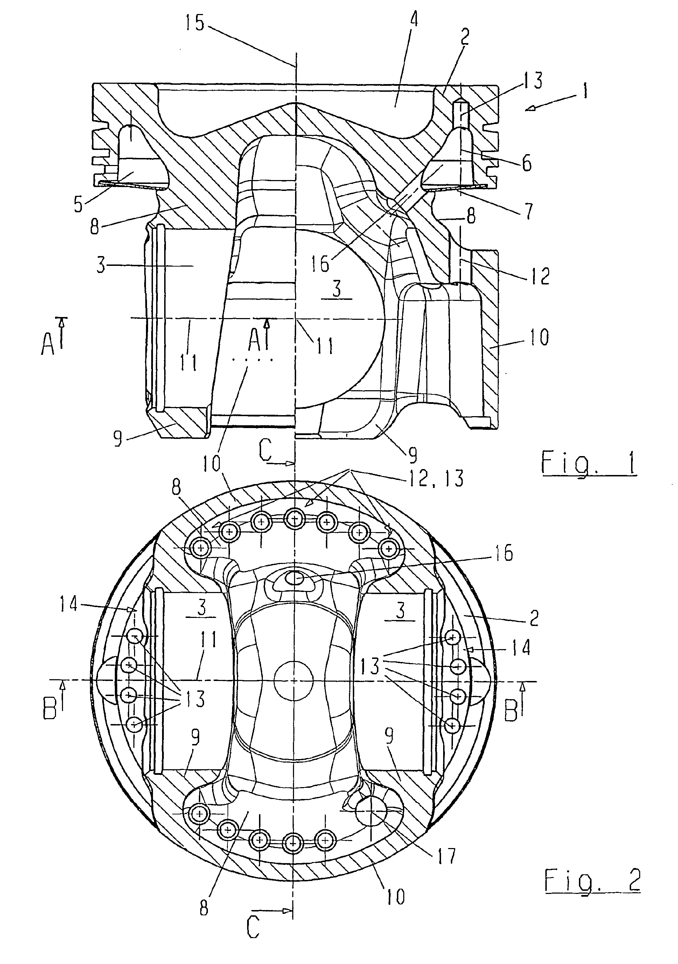

Fig. 1 zeigt einen einteiligen Kolben 1, dessen Kolbenkopf 2 auf der der Bolzennabe 9 abgewandten Seite eine Verbrennungsmulde 4 und auf der der Bolzennabe 9 zugewandten Seite einen nahe dem Rand des Kolbenkopfes 2 angeordneten Kühlkanal 5 aufweist. Der Kühlkanal 5 besteht aus einer in den Rand des Kolbenkopfes 2 eingearbeiteten und in Richtung Bolzennabe 9 offenen Ausnehmung 6, die von einem beispielsweise als zweigeteilte Tellerfeder ausgebildeteten Abdeckring 7 verschlossen ist, der in vorgespanntem Zustand in entsprechende Auflager am Kolbenkopf 2 eingebracht wird.

Über eine allseitige, auf der Innenseite des Kühlkanals 5 befindliche und im Wesentlichen ringförmig umlaufende Anbindung 8 ist der Kolbenkopf 2 sowohl gemäß der linken Hälfte von Fig. 1 (Schnitt BB in Fig. 2) mit zwei je eine Bolzenbohrung 3 aufweisenden Bolzennaben 9 als auch gemäß der rechten Hälfte von Fig. 1 (Schnitt CC in Fig. 2) mit den druck- und gegendruckseitigen Kolbenschaftelementen 10 mechanisch verbunden.

Fig. 2, ein Schnitt entlang der Längsachse 11 der Bolzenbohrung 3 in Richtung AA, zeigt die Unterseite des Kolbenkopfes 2 und im Bereich der Kolbenschaftelemente 10 die Unterseite der Anbindung 8 des Kolbenschaftes 10 an den Kolbenkopf 2. Zu erkennen sind hierbei in die Anbindung 8 des Kolbenschaftes 10 eingebrachte Durchgangsbohrungen 12, die, wie in den Figuren 1 und 2 zu sehen ist, koaxial zu in die Unterseite des Kolbenkopfes 2 eingedrehten Shakerbohrungen 13 angeordnet sind. Die Shakerbohrungen 13 sind hier zu sehen, da bei der Darstellung gemäß Fig. 2 der Abdeckring 7 weggelassen wurde. Im Bereich der Vorderseite 14 der Bolzennaben 9 befinden sich weitere in die Unterseite des Kolbenkopfes 2 eingedrehte Shakerbohrungen 13, deren Anordnung und Anzahl den vorliegenden Erfordernissen gemäß frei wählbar ist.

Die Funktion der Shakerbohrungen 13 auf der Unterseite des Kolbenkopfes 2 besteht darin, Shakerräume für das im Kühlkanal 5 befindliche Kühlöl zu bilden, die, bei Hin- und Herbewegungen des Kolbens 1 in Richtung Kolbenachse 15 mit Kühlöl gefüllt werden und damit dessen Kühlwirkung erhöhen. Ein Kanal 16 dient hierbei als Ablauf des im Kühlkanal 5 befindlichen Kühlöles, das über eine Zulauf-Ablauf-Öffnung 17 (Fig. 2) in den Kühlkanal 5 gelangt.

Bis auf die Einbringung der Bohrungen 12 und 13 ist die Herstellung des aus Stahl oder aus einer schmiedbaren Aluminiumlegierung bestehenden Kolbens 1 aus der PCT-Anmeldung mit dem amtlichen Aktenzeichen PCT/EP 02/02381 bekannt. Die Einbringung der nahe der Vorderseiten 14 der Bolzennaben 9 angeordneten Shakerbohrungen 13 erfolgt auf eine aus der Patentanmeldung DE 102 44 511.7 bekannte Weise. Probleme ergeben sich beim Eindrehen der in Richtung AA betrachtet hinter der Anbindung 8 der Kolbenschaftelemente 10 gelegenen Shakerbohrungen 13.

Gemäß der vorliegenden Erfindung wird dieses Problem dadurch gelöst, dass zunächst Durchgangsbohrungen 12 mit einem bestimmten Durchmesser an geeigneten Stellen in die Anbindung 8 der Kolbenschaftelemente 10 eingebracht werden. Danach werden koaxial zu den Durchgangsbohrungen 12 Shakerbohrungen 13 in die Unterseite des Kolbenkopfes 2 gebohrt, indem hierfür vorgesehene Bohrer mit einem Durchmesser, der kleiner als der Durchmesser der Durchgangsbohrungen 12 ist, in die Durchgangsbohrungen eingeführt werden, bevor damit dann koaxial zu den Durchgangsbohrungen 12 die Shakerbohrungen 13 in die Unterseite des Kolbenkopfes 2 gebohrt werden.

Alternativ dazu können zunächst mit einem ersten Bohrer mit ausreichender Länge die Durchgangsbohrungen 12 an geeigneten Stellen in die Anbindung 8 der Kolbenschaftelemente 10 und im gleichen Arbeitsgang die Shakerbohrungen 13 von unten in die Ausnehmung 6 des Kühlkanals 5 gebohrt werden. Anschließend werden mit einem zweiten Bohrer, der einen größerem Durchmesser als der erste Bohrer hat, zunächst die Durchgangsbohrungen 12 vergrößert und dann die Ränder der Shakerbohrungen 13 entgratet.

### Bezugszeichenliste

- 1: Kolben
- 2: Kolbenkopf
- 3: Bolzenbohrung
- 4: Verbrennungsmulde
- 5: Kühlkanal
- 6: Ausnehmung
- 7: Abdeckung
- 8: Anbindung
- 9: Bolzennabe
- 10: Kolbenschaftelement
- 11: Längsachse der Bolzenbohrung
- 12: Durchgangsbohrung
- 13: Shakerbohrung
- 14: Vorderseite der Bolzennabe 9
- 15: Kolbenachse
- 16: Kanal
- 17: Zulauf/Ablauf-Öffnung

## Patentansprüche

1. Verfahren zum Einbringen von Shakerbohrungen (13) in einen auf der dem Kolbenboden eines einteiligen Kolbens (1) abgewandten Seite des Kolbenkopfes (2) angeordneten Kühlkanal (5), **dadurch gekennzeichnet, dass** an die dem Kolbenboden abgewandte Seite des Kolbenkopfes (2) über eine im Wesentlichen ringförmig umlaufende Anbindung (8) Bolzennaben (9) mit je einer Bolzenbohrung (3) und Kolbenschaftelemente (10) angeformt sind, und
- dass koaxial zu den in den Kühlkanal (5) einzubringenden Shakerbohrungen (13) Durchgangsbohrungen (12) in die Anbindung (8) eingedreht werden,
- dass ein Bohrer, dessen Durchmesser kleiner ist als der Durchmesser der Durchgangsbohrung (12), in die Durchgangsbohrungen (12) eingeführt wird, und
- dass mit dem in der jeweiligen Durchgangsbohrung (12) eingeführten Bohrer die entsprechende Shakerbohrung (13) in die Unterseite des Kolbenkopfes (2) eingedreht wird.

2. Verfahren zum Einbringen von Shakerbohrungen (13) in den Kühlkanal (5) eines einteiligen Kolbens (1) nach Anspruch 1,
**dadurch gekennzeichnet, dass** wenigstens ein Teil der Achsen der Shakerbohrungen (13) parallel zur Kolbenachse (15) verläuft.

3. Verfahren zum Einbringen von Shakerbohrungen (13) in den Kühlkanal (5) eines einteiligen Kolbens (1) nach Anspruch 1,
**dadurch gekennzeichnet, dass** wenigstens ein Teil der Achsen der Shakerbohrungen (13) unter einem spitzen Winkel zur Kolbenachse (15) verläuft.

4. Verfahren zum Einbringen von Shakerbohrungen (13) in den Kühlkanal (5) eines einteiligen Kolbens (1) nach Anspruch 1 bis 3,
**dadurch gekennzeichnet, dass** die Shakerbohrungen (13) eine zylindrische oder langlochförmige Form aufweisen.

5. Verfahren zum Einbringen von Shakerbohrungen (13) in den Kühlkanal (5) eines einteiligen Kolbens (1) nach Anspruch 1 bis 4,
**dadurch gekennzeichnet, dass** die Shakerbohrungen (13) radial symmetrisch und/oder unsymmetrisch über den Umfang des Kühlkanals (5) verteilt sind.

6. Verfahren zum Einbringen von Shakerbohrungen (13) in einen Kühlkanal (5) eines einteiligen Kolbens (1) gemäß dem Oberbegriff des Anspruches 1,
**dadurch gekennzeichnet,**
**dass** an die dem Kolbenboden abgewandte Seite des Kolbenkopfes (2) über eine im Wesentlichen ringförmig umlaufende Anbindung (8) Bolzennaben (9) mit je einer Bolzenbohrung (3) und Kolbenschaftelemente (10) abgeformt sind, und
- **dass** in einem ersten Arbeitsgang mit einem ersten Bohrer Durchgangsbohrungen (12) in der Anbindung (8) und die Shakerbohrungen (13) in dem Kühlkanal (5) hergestellt werden, und
- dass in einem zweiten Arbeitsgang mit einem zweiten Bohrer, dessen Durchmesser größer ist als derjenige des ersten Bohrers, die Durchgangsbohrung (12) vergrößert und anschließend die Ränder der Shakerbohrungen (13) entgratet werden.

## Claims

1. Procedure for drilling shaker holes (13) into a cooling channel (5) arranged on the side of the piston head (2) facing away from the piston crown of a monobloc piston (1), **characterised in that** pin hubs (9) are formed with one pin hole (3) each and pin shaft elements (10) to the side of the piston head (2) facing away from the piston crown via a connection (8) with an essentially annular shape, and **in that**
- through-holes (12) are drilled into the connection (8) coaxially to the shaker holes (13) to be drilled into the cooling channel (5),
- a drill the diameter of which is smaller than the diameter of the through-hole (12) is inserted into the through-holes (12), and
- with the drill inserted in the relevant through-hole (12), the corresponding shaker hole (13) is drilled into the underside of the piston head (2).

2. Procedure for drilling shaker holes (13) into the cooling channel (5) of a monobloc piston (1) in accordance with Claim 1,
**characterised in that** at least a part of the axes of the shaker holes (13) runs parallel to the piston axis (15).

3. Procedure for drilling shaker holes (13) into the cooling channel (5) of a monobloc piston (1) in accordance with Claim 1,
**characterised in that** at least a part of the axes of the shaker holes (13) runs at an acute angle to the piston axis (15).

4. Procedure for drilling shaker holes (13) into the cooling channel (5) of a monobloc piston (1) in accordance with Claims 1 to 3,
**characterised in that** the shaker holes (13) are of a cylindrical or oblong shape.

5. Procedure for drilling shaker holes (13) into the cooling channel (5) of a monobloc piston (1) in accordance with Claims 1 to 4,
**characterised in that** the shaker holes (13) are distributed along the circumference of the cooling channel (5) in a radially symmetrical and/or unsymmetrical configuration.

6. Procedure for drilling shaker holes (13) into the cooling channel (5) of a monobloc piston (1) in accordance with the preamble of Claim 1, **characterised in that**
- the pin hubs (9) are formed with one pin hole (3) each and pin shaft elements (10) to the side of the piston head (2) facing away from the piston crown via a connection (8) with an essentially annular shape, and
- in a first procedure through-holes (12) are drilled with a first drill into the connection (8) and shaker holes (13) into the cooling channel (5), and
- in a second procedure the through-holes (12) are enlarged with a second drill, the diameter of which is larger than the diameter of the first drill, and the edges of the shaker holes (13) are then deburred.

## Revendications

1. Procédé destiné à ménager des percements d'agitation (13) dans un canal de refroidissement (5) disposé du côté de la tête de piston (2) orientée vers le fond d'un piston monobloc (1), **caractérisé en ce que** des bossages (9) de logement d'axe sont confectionnés du côté de la tête (2) de piston orientée vers le fond du piston par l'intermédiaire d'une attache (8) périphérique et essentiellement circulaire, chaque bossage (9) comprenant un alésage (3) à logement d'axe et des éléments (10) de jupe de piston,
- et **en ce que** des trous traversants (12) sont usinés dans l'attache (8) coaxialement aux percements d'agitation (13) à effectuer dans le canal de refroidissement (5),
- et **en ce qu'**un foret de diamètre inférieur à celui des trous traversants (12) est introduit dans ces derniers,
- et **en ce que** chaque percement d'agitation (13) est usiné dans la face inférieure de la tête (2) de piston à l'aide d'un foret introduit dans le trou traversant (12) correspondant.

2. Procédé destiné à ménager des percements d'agitation (13) dans le canal de refroidissement (5) d'un piston monobloc (1) selon la revendication 1, **caractérisé en ce qu'**au moins une portion de l'axe des percements d'agitation (13) est parallèle à l'axe (15) du piston.

3. Procédé destiné à effectuer des percements d'agitation (13) dans le canal de refroidissement (5) d'un piston monobloc (1) selon la revendication 1, **caractérisé en ce qu'**au moins une portion de l'axe des percements d'agitation (13) forme un angle aigu avec l'axe (15) du piston.

4. Procédé destiné à ménager des percements d'agitation (13) dans le canal de refroidissement (5) d'un piston monobloc (1) selon l'une quelconque des revendications 1 à 3
**caractérisé en ce que** les percements d'agitation (13) sont de forme cylindrique ou oblongue.

5. Procédé destiné à ménager des percements d'agitation (13) dans le canal de refroidissement (5) d'un piston monobloc (1) selon l'une quelconque des revendications 1 à 4
**caractérisé en ce que** les percements d'agitation (13) sont répartis symétriquement ou asymétriquement sur le périmètre du canal de refroidissement (5).

6. Procédé destiné à ménager des percements d'agitation (13) dans le canal de refroidissement (5) d'un piston monobloc (1) au sens générique de la revendication 1
**caractérisé**
- **en ce que** des bossages (9) de logement d'axe sont confectionnés sur le côté de la tête (2) de piston adjacent au fond du piston par l'intermédiaire d'une attache (8) périphérique et essentiellement circulaire, chaque bossage (9) comprenant un alésage (3) à logement d'axe et des éléments (10) de jupe de piston,
- et **en ce que** des trous traversants (12) et les percements d'agitation (13) sont effectués respectivement dans l'attache (8) et dans le canal de refroidissement (5) par un premier foret lors d'une première passe d'usinage,
- et **en ce que**, lors d'une seconde passe d'usinage, le trou traversant (12) est agrandi à l'aide d'un second foret dont le diamètre est supérieur à celui du premier foret et que les bords des percements d'agitation (13) sont ensuite ébarbés.
